(19) **Europäisches Patentamt**
**European Patent Office**
**Office européen des brevets**

(11) **EP 3 576 429 B1**

(12) **EUROPEAN PATENT SPECIFICATION**

(45) Date of publication and mention
of the grant of the patent:
**11.09.2024  Bulletin 2024/37**

(21) Application number: **18745194.3**

(22) Date of filing: **10.01.2018**

(51) International Patent Classification (IPC):
**H04R 3/00** *(2006.01)*    **G01S 7/52** *(2006.01)*
**G01S 7/521** *(2006.01)*    **G01S 7/526** *(2006.01)*
**B06B 1/06** *(2006.01)*    **B06B 1/02** *(2006.01)*

(52) Cooperative Patent Classification (CPC):
**B06B 1/0692; B06B 1/0215; B06B 1/0261;**
**G01S 7/52004; H04R 3/00;** B06B 2201/30;
B06B 2201/40; G01S 15/931; G01S 2007/52009

(86) International application number:
**PCT/JP2018/000269**

(87) International publication number:
**WO 2018/139193 (02.08.2018 Gazette 2018/31)**

(54) **ULTRASONIC DEVICE**

ULTRASCHALLVORRICHTUNG

DISPOSITIF ULTRASONORE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority:  **25.01.2017   JP 2017011456**

(43) Date of publication of application:
**04.12.2019   Bulletin 2019/49**

(73) Proprietor: **Murata Manufacturing Co., Ltd.**
**Nagaokakyo-shi, Kyoto 617-8555 (JP)**

(72) Inventors:
• **NAKAO, Motoyasu**
**Nagaokakyo-shi**
**Kyoto 617-8555 (JP)**

• **WATANABE, Kosuke**
**Nagaokakyo-shi**
**Kyoto 617-8555 (JP)**

(74) Representative: **Reddie & Grose LLP**
**The White Chapel Building**
**10 Whitechapel High Street**
**London E1 8QS (GB)**

(56) References cited:
**EP-A1- 0 706 835          EP-A2- 1 410 950**
**WO-A1-2016/167003     JP-A- 2014 115 255**
**JP-A- 2014 115 255       JP-A- 2015 010 888**
**JP-A- 2015 010 888**

**Description**

Technical Field

The present invention relates to an ultrasonic apparatus, and particularly relates to a technique for measuring the Q factor and the resonant frequency of a three-terminal ultrasonic transducer that includes a transmitting terminal and a receiving terminal independent of each other.

Background Art

Ultrasonic apparatuses are used in practice, in which an ultrasonic transducer transmits ultrasonic waves, receives reflected waves from an object to be detected, and thereby measures, for example, a distance to the object to be detected.

If a foreign substance, such as mud, adheres to the vibrating surface of the ultrasonic transducer, or if water droplets adhering to the vibrating surface freeze, an ultrasonic vibrator may be unable to properly perform transmission and reception. This may lead to failure in proper detection of an object to be detected existing in front of the ultrasonic vibrator.

Japanese Patent No. 2998232 discloses an ultrasonic sensor that is capable of detecting adhesion of a foreign substance, such as mud. This ultrasonic sensor detects the resonant frequency of an ultrasonic vibrator, monitors and compares the resonant frequency with the natural frequency, and thereby detects an anomaly in the operation of the ultrasonic vibrator.

Japanese Unexamined Patent Application Publication No. 2015-10888 discloses a configuration that measures the resonant frequency and the Q factor of an ultrasonic vibrator from reverberant vibration generated in the ultrasonic vibrator by transmitting an ultrasonic pulse, estimates an output amplitude using the measured resonant frequency and Q factor, and thus improves the performance of detecting an object located at a short distance.

The ultrasonic transducer (ultrasonic sensor) used in both JP2998232 and JP2015-10888 employs a so-called two-terminal ultrasonic vibrator in which a transmitting vibrator (transmitting electrode) for transmitting ultrasonic waves and a receiving vibrator (receiving electrode) for receiving reflected waves are combined. In the measurement of the resonant frequency and the Q factor in such a two-terminal ultrasonic transducer, the impedance of a transmitting circuit and a receiving circuit connected to a transmitting and receiving vibrator may interfere with accurate measurement of the resonant frequency and the Q factor.

Particularly in the configuration disclosed in JP2015-10888, where a transformer for boosting the voltage of a transmit signal is connected to the transmitting circuit (driving circuit), the inductance of the transformer affects the resonant frequency and the Q factor of the ultrasonic transducer.

EP0706835 describes an ultrasonic piezoelectric transducer alternatingly operated in a transmitting mode and in a receiving mode. In the transmitting mode an electrical excitation signal is applied between one or more common electrodes and one or more transmission electrodes, and in the receiving mode an electrical reception signal is collected between the one or more common electrodes and one or more reception electrodes. Moreover, in the receiving mode one or more electrodes which are not used as reception electrodes are connected via a low impedance connection with the one or more common electrodes. This has the effect that in the receiving mode the resonance frequencies of the piezoelectric transducer are shifted to lower values so that with the same operating frequency the piezolectric transducer is in series resonance in the transmitting mode and in parallel resonance in the receiving mode. In this way, the piezoelectric transducer operates under better conditions with improved frequency matching for transmission and for reception.

JP2015010888 discloses an ultrasonic sensor device for which the performance of detecting an object at a short distance is improved, even when the vibration characteristic of an ultrasonic vibrator changes. The ultrasonic vibrator transmits an ultrasonic pulse and receives a reflection wave reflected at an object. The amplification unit amplifies an electric signal outputted from the ultrasonic vibrator. A first measurement unit measures, on the basis of the electric signal outputted from the ultrasonic vibrator, a Q value of reverberating vibration generated in the ultrasonic vibrator due to the ultrasonic pulse being transmitted. A second measurement unit measures the frequency of reverberating vibration on the basis of the electric signal outputted from the ultrasonic vibrator. A prediction unit predicts the output amplitude of the amplification unit on the basis of the Q value measured by the first measurement unit, the frequency measured by the second measurement unit, and the output amplitude in a non-saturated state outputted from the amplification unit. A comparison unit compares the output amplitude outputted from the amplification unit at a given point of time and the output amplitude predicted by the prediction unit at that point of time, and a determination unit determines, on the basis of the result of comparison, whether or not the object is present.

EP1410950 discloses a device having at least one sensor and a controller, whereby the sensor is an acoustic sensor, especially an ultrasonic sensor, and the acoustic sensor values can be evaluated to detect objects. At least one acoustic sensor value can be evaluated by the controller for freedom from sensor faults, whereby the at least one measured sensor value can be compared with stored values of a normal sensor function.

JP2014115255 discusses an ultrasound sensor that can predict the reverberation time even in the presence of an obstacle. An ultrasound sensor comprises a piezoelectric vibrator, a drive unit that drives the piezoelectric vibrator, a variable capacity element connected in parallel to the piezoelectric vibrator, a signal processor that adjusts the capacity of the variable capacity element, and an attenuator that attenuates electric signals outputted from the piezoelectric vibrator and outputs the attenuated signals to the signal processor. The signal processor measures the peak voltage of reverberation signals that are generated when ultrasounds are transmitted from the piezoelectric vibrator, calculates the Q value of the piezoelectric vibrator on the basis of the measured peak voltage and adjusts the capacity of the variable capacity element on the basis of the calculated Q value of the piezoelectric vibrator.

WO2016/167003 discusses an ultrasonic sensor that can suppress a reverberant vibration by using a simple circuit configuration. The ultrasonic sensor includes: a flat-plate-shaped piezoelectric body, which includes a transmission region for an ultrasonic wave and a reception region for a reflected wave of the ultrasonic wave; a common electrode that is provided in the transmission region and the reception region; a transmission electrode that is provided in the transmission region; a reception electrode that is provided in the reception region; a semiconductor element that is electrically connected to the transmission electrode and the reception electrode; and a semiconductor element that is electrically connected to the transmission electrode and the reception electrode and switches a path between a conductive state and a non-conductive state. The semiconductor element puts the path into the conductive state after application of the alternating-current voltage is stopped, and as a result, a reverberation signal, which is output from the reception region in accordance with a reverberant vibration of the ultrasonic wave, is fed back to the transmission electrode.

The present invention has been made in view of the problems described above. We have appreciated that it would be desirable to provide an ultrasonic apparatus that accurately measures the resonant frequency and the Q factor of an ultrasonic transducer, and thereby achieves improved accuracy in detecting anomalies of the ultrasonic transducer.

SUMMARY OF INVENTION

The invention is defined in the independent claim to which reference should now be made. Advantageous features are set forth in the dependent claims.

According to a first aspect of the invention, an ultrasonic apparatus comprises: a three-terminal ultrasonic transducer including a common electrode, a transmitting electrode, and a receiving electrode independent of the transmitting electrode; a piezoelectric body including a transmitting region for transmitting ultrasonic waves and a receiving region for receiving reflected ultrasonic waves, a transmitting circuit configured to output a driving signal to the transmitting electrode to cause the ultrasonic transducer to transmit ultrasonic waves; a receiving circuit configured to receive a receive signal from the receiving electrode; a frequency measuring circuit configured to measure a resonant frequency of the ultrasonic transducer from a reverberation signal in the receive signal; a Q-factor measuring circuit configured to measure a Q factor of the ultrasonic transducer from the reverberation signal, and an anomaly determining unit configured to determine an anomaly of the ultrasonic transducer on the basis of the Q factor measured by the Q-factor measuring circuit and the resonant frequency measured by the frequency measuring circuit, and determine an anomaly that results from a foreign substance adhering to the transducer based on changes in the Q factor or resonant frequency and by comparing the measured Q factor and the measured resonant frequency with known reference values for the Q factor and the resonant frequency measured when the ultrasonic transducer is clean.

Preferably, the anomaly determining circuit is configured to make an anomaly determination based on changes in the Q factor and resonant frequency due to the adhesion of mud or water droplets to the ultrasonic transducer.

Preferably, the transmitting electrode is disposed opposite the common electrode, with the transmitting region of the piezoelectric body interposed therebetween, and is electrically connected to the transmitting region, the receiving electrode is disposed opposite the common electrode with the receiving region of the piezoelectric body interposed therebetween, and is electrically connected to the receiving region, and the common electrode is electrically connected to both the transmitting region and the receiving region.

The ultrasonic apparatus preferably further includes a switching unit configured to ground the transmitting electrode when the Q-factor measuring circuit measures the Q factor and the frequency measuring circuit measures the resonant frequency.

The Q-factor measuring circuit preferably includes an envelope detecting circuit, a damping time measuring circuit, and a Q-factor calculating circuit. The envelope detecting circuit detects an envelope of an amplitude of the reverberation signal. The damping time measuring circuit measures a damping time taken by the amplitude to decay from a first amplitude to a second amplitude on the envelope. The Q-factor calculating circuit calculates the Q factor of the ultrasonic transducer on the basis of the first and second amplitudes, the damping time, and the resonant frequency of the ultrasonic transducer.

The ultrasonic apparatus preferably further includes a clock signal generating circuit configured to generate a clock signal used in common by the Q-factor measuring circuit and the frequency measuring circuit.

The present invention reduces the influence of the impedance of the transmitting circuit on the measurement of the resonant frequency and the Q factor of the ultrasonic transducer, and enables accurate measurement of the resonant frequency and the Q factor. This improves accuracy in detecting anomalies of the ultrasonic transducer.

BRIEF DESCRIPTION OF DRAWINGS

Fig. 1 is a block diagram illustrating a general configuration of an ultrasonic apparatus according to a first embodiment.
Fig. 2 is a diagram illustrating a first example of a transmitting circuit illustrated in Fig. 1.
Fig. 3 is a diagram illustrating a second example of the transmitting circuit illustrated in Fig. 1.
Fig. 4 is a graph showing a relation between adhesion of water droplets and changes in Q factor and resonant frequency.
Fig. 5 is a graph showing a relation between adhesion of mud and changes in Q factor and resonant frequency.
Fig. 6 is a diagram illustrating details of a detecting circuit illustrated in Fig. 1.
Fig. 7 is a diagram for explaining technical details of how the Q factor and the resonant frequency are measured from a reverberation signal in a receive signal.
Fig. 8 is a diagram for explaining further details of the detecting circuit illustrated in Fig. 6.
Fig. 9 is a diagram illustrating a modification of the detecting circuit.
Fig. 10 is a diagram illustrating another modification of the ultrasonic apparatus.
Fig. 11 is a block diagram illustrating a general configuration of an ultrasonic apparatus according to a second embodiment.
Fig. 12 is a diagram illustrating a transmitting circuit illustrated in Fig. 11.
Fig. 13 is a graph that compares the occurrence of Q-factor measurement errors between when a transmitting electrode is grounded and when it is not grounded.
Fig. 14 is a graph that compares the occurrence of resonant frequency measurement errors between when the transmitting electrode is grounded and when it is not grounded.

DESCRIPTION OF EMBODIMENTS

Embodiments of the present invention will now be described in detail with reference to the drawings. The same or equivalent parts in the drawings are denoted by the same reference numerals and their description will not be repeated.

First Embodiment

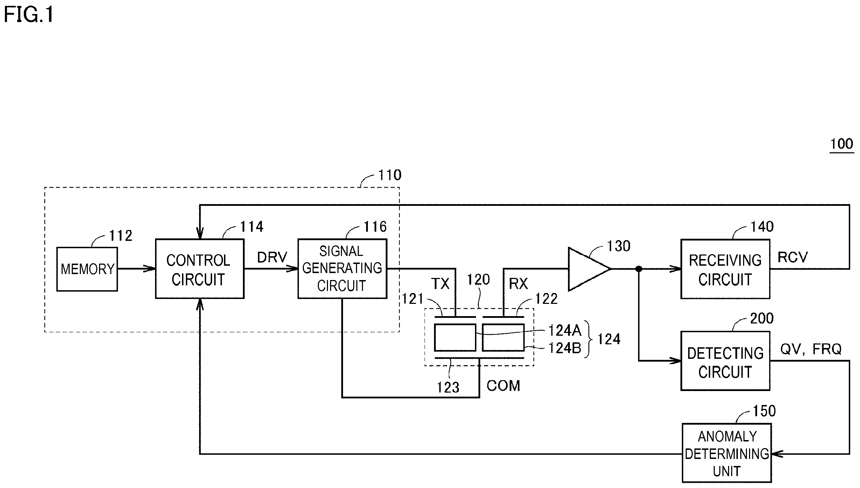

Fig. 1 is a block diagram illustrating a general configuration of an ultrasonic apparatus 100 according to a first embodiment. Referring to Fig. 1, the ultrasonic apparatus 100 includes a transmitting circuit 110, an ultrasonic transducer 120, an amplifier 130, a receiving circuit 140, an anomaly determining circuit 150, and a detecting circuit 200.

The transmitting circuit 110 is a circuit for transmitting ultrasonic waves from the ultrasonic transducer 120 by driving the ultrasonic transducer 120. The transmitting circuit 110 includes a memory 112, a control circuit 114, and a signal generating circuit 116. The control circuit 114 reads data stored in the memory 112 and outputs, to the signal generating circuit 116, a control signal DRV suitable for driving the ultrasonic transducer 120. On the basis of the control signal DRV output from the control circuit 114, the signal generating circuit 116 generates an alternating-current voltage (ultrasonic pulse: transmit signal) from a direct-current voltage. The signal generating circuit 116 amplifies the generated alternating-current voltage as appropriate, and supplies the amplified alternating-current voltage to the ultrasonic transducer 120. The configuration of the signal generating circuit 116 will be described in detail later on.

The ultrasonic transducer 120 is a so-called three-terminal ultrasonic transducer that includes a transmitting electrode 121 (terminal TX), a receiving electrode 122 (terminal RX), a common electrode 123 (terminal COM), and a piezoelectric body 124. The transmitting electrode 121 and the common electrode 123 are connected to the signal generating circuit 116 of the transmitting circuit 110. The receiving electrode 122 is connected to the receiving circuit 140 and the detecting circuit 200, with the amplifier 130 interposed therebetween.

The piezoelectric body 124 includes a transmitting region 124A for transmitting ultrasonic waves, and a receiving region 124B for receiving reflected ultrasonic waves. The transmitting electrode 121 is disposed opposite the common electrode 123, with the transmitting region 124A of the piezoelectric body 124 interposed therebetween, and is electrically connected to the transmitting region 124A. The receiving electrode 122 is disposed opposite the common electrode 123, with the receiving region 124B of the piezoelectric body 124 interposed therebetween, and is electrically connected to the receiving region 124B. The common electrode 123 is electrically connected to both the transmitting region 124A and the receiving region 124B.

The transmitting electrode 121 receives a transmit signal from the signal generating circuit 116. The transmitting region 124A of the piezoelectric body 124 vibrates the transmitting electrode 121 in accordance with the transmit signal, and thereby transmits ultrasonic waves from the transmitting electrode 121, for example, into the air.

The ultrasonic waves transmitted from the transmitting electrode 121 are reflected by an object. The receiving electrode 122 receives the reflected waves from the object and vibrates. The receiving region 124B of the piezoelectric body 124 converts the vibration of the transmitting electrode 121 into an electric signal, and outputs the electric signal as a receive signal to the amplifier 130.

The amplifier 130 is, for example, an inverting amplifier circuit that includes a resistor and an operational amplifier (neither of which is shown). The amplifier 130 amplifies the receive signal from the transmitting electrode 121 and outputs it to the receiving circuit 140 and the detecting circuit 200.

The receiving circuit 140 receives the receive signal amplified by the amplifier 130. The receiving circuit 140 detects the voltage value of the receive signal, and outputs a detected value RCV to the control circuit 114.

On the basis of the receive signal amplified by the amplifier 130, the detecting circuit 200 measures a resonant frequency (FRQ) and a Q factor (QV) of the ultrasonic transducer 120 as described below. The resonant frequency and the Q factor measured are output to the anomaly determining circuit 150. In the present embodiment, the detecting circuit 200 is connected to the receiving electrode 122 of the three-terminal ultrasonic transducer 120, in which the transmitting electrode 121 and the receiving electrode 122 are separated. This can reduce the influence of the impedance of the transmitting circuit 110 on the measurement of the resonant frequency and the Q factor.

Some recent systems that use an ultrasonic transducer originally have the function of detecting the envelope of a reverberation signal in a receive signal, such as that described above, and the function of measuring a resonant frequency. Therefore, when a Q-factor measuring circuit is connected to the receiving circuit, the envelope detecting function and the resonant frequency measuring function, which are originally included, can be combined for Q factor measurement. This makes it relatively easy to implement the Q-factor measuring circuit.

On the basis of the resonant frequency and the Q factor measured in the detecting circuit 200, the anomaly determining circuit 150 makes an anomaly determination as to whether there is adhesion of, for example, water droplets or mud to the ultrasonic transducer 120. The result of the determination made by the anomaly determining circuit 150 is output to the control circuit 114. Although the anomaly determining circuit 150 in Fig. 1 is illustrated as a circuit independent of the control circuit 114, the function of the anomaly determining circuit 150 may be included in the control circuit 114.

On the basis of the detected value RCV from the receiving circuit 140, the control circuit 114 identifies information about the presence and movement of an object and the distance to the object. If an anomaly is detected by the anomaly determining circuit 150, the control circuit 114 notifies the user of the occurrence of the anomaly using a notification device (not shown). The ultrasonic apparatus 100 can be used, for example, as an ultrasonic sensor mounted on a vehicle.

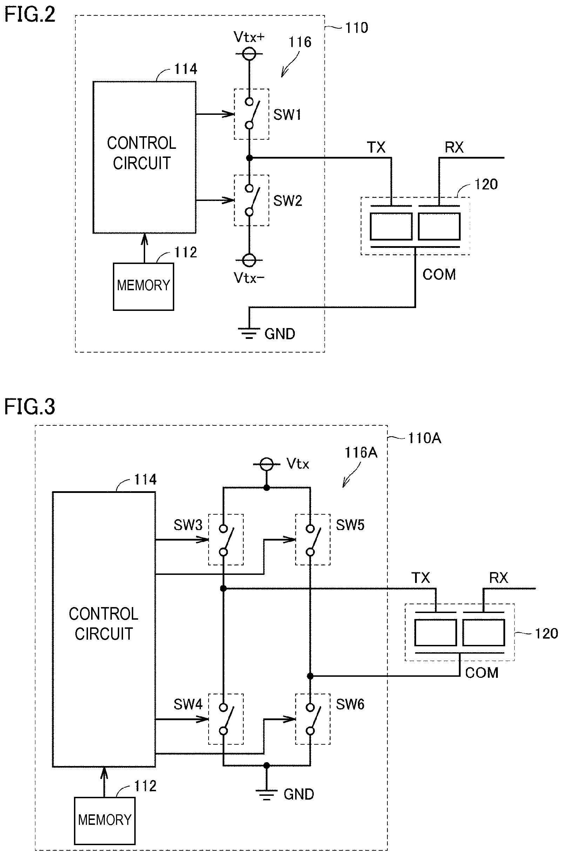

Fig. 2 is a diagram for explaining details of the transmitting circuit 110 illustrated in Fig. 1. Referring to Fig. 2, the signal generating circuit 116 includes a positive power supply $V_{tx+}$, a negative power supply $V_{tx-}$, and switching elements (switching units) SW1 and SW2. The switching elements SW1 and SW2 are connected in series between the positive power supply $V_{tx+}$ and the negative power supply $V_{tx-}$ to form a so-called half-bridge circuit. A connection node between the switching element SW1 and the switching element SW2 is connected to the transmitting electrode 121 (TX) of the ultrasonic transducer 120. The switching elements SW1 and SW2 are controlled by the control signal DRV from the control circuit 114 and generate, from the direct-current positive power supply $V_{tx+}$ and negative power supply $V_{tx-}$, an alternating-current voltage (transmit signal) for driving the ultrasonic transducer 120. Specifically, by bringing the switching element SW1 into conduction and bringing the switching element SW2 out of conduction, a positive pulse is output to the ultrasonic transducer 120. Conversely, by bringing the switching element SW1 out of conduction and bringing the switching element SW2 into conduction, a negative pulse is output to the ultrasonic transducer 120.

The common electrode 123 (COM) of the ultrasonic transducer 120 is connected to a ground potential GND in the transmitting circuit 110.

Fig. 3 is a diagram illustrating another example of the transmitting circuit illustrated in Fig. 1. A transmitting circuit 110A illustrated in Fig. 3 differs from the transmitting circuit in Fig. 2 in that a signal generating circuit 116A forms a full-bridge circuit.

Referring to Fig. 3, the signal generating circuit 116A includes a direct-current power supply $V_{tx}$ and switching elements (switching units) SW3 to SW6. The switching elements SW3 and SW4 are connected in series between the direct-current power supply $V_{tx}$ and the ground potential GND. The switching elements SW5 and SW6 are also connected in series between the direct-current power supply $V_{tx}$ and the ground potential GND. The switching elements SW3 to SW6 thus form a full-bridge circuit.

The transmitting electrode 121 (TX) of the ultrasonic transducer 120 is connected to a connection node between the switching element SW3 and the switching element SW4. The common electrode 123 (COM) of the ultrasonic transducer 120 is connected to a connection node between the switching element SW5 and the switching element SW6.

The switching elements SW3 to SW6 are controlled by the control signal DRV from the control circuit 114 and generate, from the direct-current power supply $V_{tx}$, an alternating-current voltage (transmit signal) for driving the ultrasonic transducer 120. Specifically, by bringing the switching elements SW3 and SW6 into conduction and bringing the switching elements SW4 and SW5 out of conduction, a positive pulse is output to the ultrasonic transducer 120. Conversely, by bringing the switching elements SW3 and SW6 out of conduction and bringing the switching elements SW4 and SW5 into conduction, a negative pulse is output to the ultrasonic transducer 120.

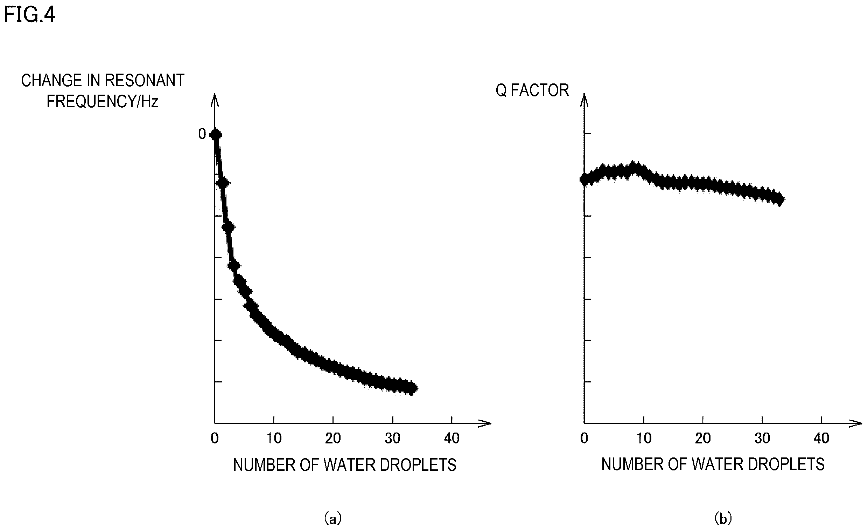

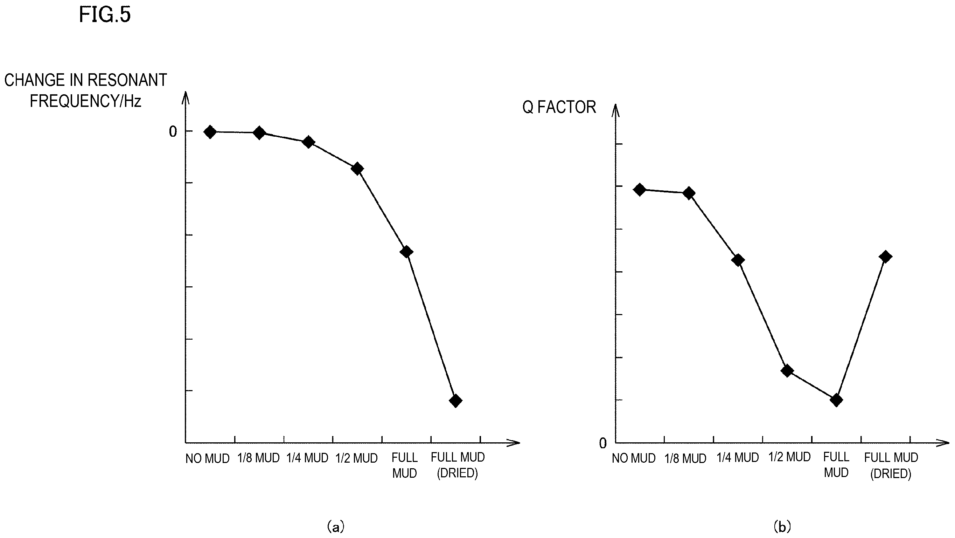

With reference to Fig. 4 and Fig. 5, a technique will be described which determines, from the resonant frequency and the Q factor of the ultrasonic transducer 120, whether there is adhesion of water droplets and mud to the ultrasonic transducer 120.

Fig. 4 is a graph showing how the resonant frequency and the Q factor change when water droplets adhere to the surface of the ultrasonic transducer 120. Fig. 4(a) shows a relation between the amount of adhesion of water droplets (i.e., the number of water droplets) and the resonant frequency, and Fig. 4(b) shows a relation between the amount of adhesion of water droplets (i.e., the number of water droplets) and the Q factor. As can be seen from Fig. 4, the resonant frequency decreases as the number of water droplets increases, whereas the Q factor stays substantially the same regardless of the number of water droplets.

Fig. 5 is a graph showing how the resonant frequency and the Q factor change when mud adheres to the surface of the ultrasonic transducer 120. Fig. 5(a) shows a relation between the amount of adhesion of mud and the resonant frequency, and Fig. 5(b) shows a relation between the amount of adhesion of mud and the Q factor. As can be seen from Fig. 5, when there is adhesion of mud, both the resonant frequency and the Q factor change depending on the degree of adhesion of mud (the amount of adhesion and the state of dryness).

Thus, measuring the changes in the resonant frequency and Q factor of the ultrasonic transducer 120 enables detection of an anomaly, that is, adhesion of water droplets or mud to the surface of the ultrasonic transducer 120. To accurately detect an anomaly associated with adhesion of water droplets or mud to the ultrasonic transducer 120, it is necessary to improve accuracy in measuring the resonant frequency and the Q factor.

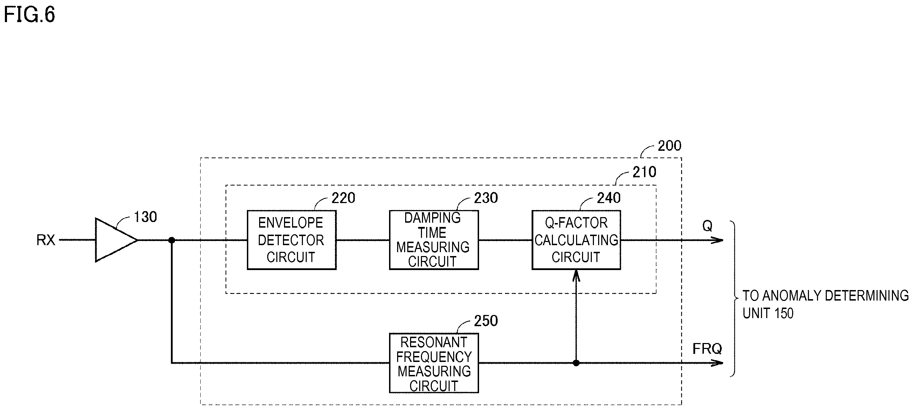

Fig. 6 is a diagram illustrating details of the detecting circuit 200 illustrated in Fig. 1. Referring to Fig. 6, the detecting circuit 200 includes a Q-factor measuring circuit 210 and a resonant frequency measuring circuit 250. The Q-factor measuring circuit 210 includes an envelope detector circuit 220, a damping time measuring circuit 230, and a Q-factor calculating circuit 240.

The resonant frequency measuring circuit 250 receives a receive signal amplified by the amplifier 130. From a reverberation signal in the receive signal, the resonant frequency measuring circuit 250 measures the resonant frequency of the ultrasonic transducer 120. The measured resonant frequency is output to the Q-factor calculating circuit 240 and the anomaly determining circuit 150.

The envelope detector circuit 220 calculates the envelope of the reverberation signal in the receive signal. The damping time measuring circuit 230 measures the damping time between amplitude voltages at any two points on the envelope obtained by the envelope detector circuit 220. The Q-factor calculating circuit 240 calculates the Q factor using the amplitude voltages at two points on the envelope used in the damping time measuring circuit 230, the damping time therebetween, and the resonant frequency measured by the resonant frequency measuring circuit 250. The Q-factor calculating circuit 240 then outputs the calculated Q factor to the anomaly determining circuit 150.

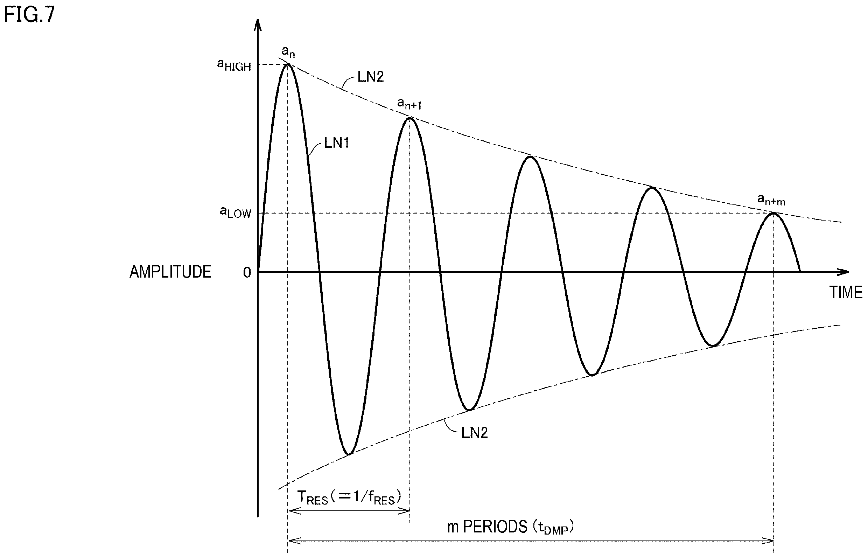

With reference to Fig. 7, technical details of how the resonant frequency measuring circuit 250 and the Q-factor measuring circuit 210 measure the resonant frequency and the Q factor, respectively, will be further described.

Referring to Fig. 7, when the transmitting electrode 121 transmits ultrasonic waves, the ultrasonic transducer 120 continues to vibrate at the natural frequency (resonant frequency) of the ultrasonic transducer 120 for a while even after the transmission ends. Generally, this vibration is referred to as "reverberant vibration", and the signal appearing in the receive signal at this point is referred to as "reverberation signal". As represented by a solid curve LN1 in Fig. 7, the reverberation signal is a signal that vibrates while gradually decreasing in amplitude with time.

The period of time between adjacent peaks of the reverberation signal is a period $T_{RES}$ of reverberant vibration, and the reciprocal of the period $T_{RES}$ corresponds to the resonant frequency $f_{RES}$ (= $1/T_{RES}$) of the ultrasonic transducer 120. Therefore, the resonant frequency of the ultrasonic transducer 120 can be measured by measuring the time interval between adjacent peaks, or by measuring the time interval between zero-crossing points at which the amplitude is zero.

The Q factor can be typically expressed as Q = $1/2\zeta$, where $\zeta$ is the damping ratio of a damping signal. When, as in Fig. 7, the amplitude decays from an amplitude $a_n$ to an amplitude $a_{n+m}$ over m periods, the Q factor can be expressed by the following equation (1).

[Equation 1]

$$Q = \frac{1}{2\zeta} = \frac{\pi \cdot m}{\ln \dfrac{a_n}{a_{n+m}}} \qquad \cdots (1)$$

However, the calculation technique using the equation (1) requires an additional circuit that determines the amplitude of each peak of the reverberation signal. By using the envelope (indicated by a dot-and-dash curve LN2 in Fig. 7) of the reverberation signal, the equation (1) can be rewritten as the following equation (2), where $a_{HIGH}$ and $a_{LOW}$ are amplitudes at any two points on the envelope, and $t_{DMP}$ is the damping time between the two points.

[Equation 2]

$$Q = \frac{\pi \cdot m}{\ln \dfrac{a_n}{a_{n+m}}} = \frac{\pi}{\ln \dfrac{a_{HIGH}}{a_{LOW}}} \cdot \frac{t_{DMP}}{T_{RES}} \quad \cdots (2)$$

In Fig. 7, for ease of understanding, the two amplitudes $a_{HIGH}$ and $a_{LOW}$ are expressed as peak amplitudes $a_n$ and $a_{n+m}$, and the relation $t_{DMP} = m \cdot T_{RES}$ is satisfied. However, the two amplitudes do not necessarily need to be peak amplitudes, and may be any points on the envelope. That is, using the envelope makes it possible to measure the Q factor without detecting peak amplitudes.

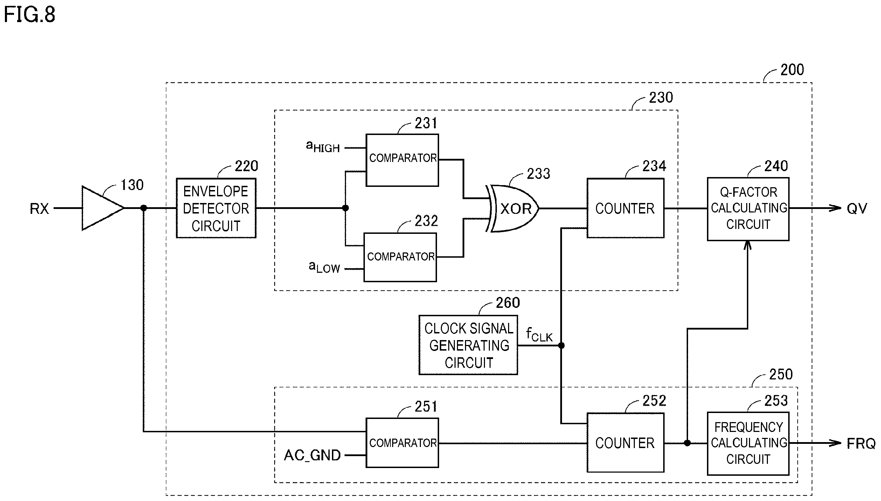

Fig. 8 is a diagram illustrating details of the damping time measuring circuit 230 and the resonant frequency measuring circuit 250 in Fig. 6 that are configured to execute the computation illustrated in Fig. 7.

Referring to Fig. 8, the resonant frequency measuring circuit 250 includes a comparator 251, a counter 252, and a frequency calculating circuit 253.

The comparator 251 compares an amplified receive signal to an alternating-current ground potential AC_GND, removes a direct-current bias in the receive signal, and converts the receive signal into an alternating-current signal. The counter 252 counts the time interval between zero-crossing points of the receive signal output from the comparator 251. On the basis of the counter value from the counter 252, the frequency calculating circuit 253 calculates the period $T_{RES}$ of the reverberation signal from the zero-crossing time points, and calculates the resonant frequency $f_{RES}$ (= FRQ) by taking the reciprocal of the period $T_{RES}$.

The damping time measuring circuit 230 includes comparators 231 and 232, an exclusive OR (XOR) circuit 233, and a counter 234.

The comparator 231 compares the envelope value to the threshold $a_{HIGH}$ on the high amplitude side, and the comparator 232 compares the envelope value to the threshold $a_{LOW}$ on the low amplitude side. From the outputs of the comparators 231 and 232, the XOR circuit 233 continues to output a logical HIGH signal until the amplitude $a_{HIGH}$ on the envelope decays to $a_{LOW}$. By counting the time during which the output from the XOR circuit 233 is logical HIGH, the counter 234 calculates the damping time $t_{DMP}$ taken by the amplitude on the envelope to decay from $a_{HIGH}$ to $a_{LOW}$. Then, the Q-factor calculating circuit 240 calculates the Q factor from the equation (2) on the basis of the amplitudes $a_{HIGH}$ and $a_{LOW}$, the damping time $t_{DMP}$, and the period $T_{RES}$.

A clock signal generating circuit 260 is further provided in Fig. 8. The clock signal generating circuit 260 is configured to output a common clock signal $f_{CLK}$ to the counter 234 of the damping time measuring circuit 230 and the counter 252 of the resonant frequency measuring circuit 250. When the common clock signal $f_{CLK}$ is used, the equations $t_{DMP} = N_{DMP}/f_{CLK}$ and $T_{RES} = N_{RES}/f_{CLK}$ hold, where $N_{DMP}$ is the count value of the counter 234 and $N_{RES}$ is the count value of the counter 252. The equation (2) can thus be rewritten as the following equation (3).

[Equation 3]

$$Q = \frac{\pi}{\ln \dfrac{a_{HIGH}}{a_{LOW}}} \cdot \frac{t_{DMP}}{T_{RES}} = \frac{\pi}{\ln \dfrac{a_{HIGH}}{a_{LOW}}} \cdot \frac{N_{DMP} \cdot \dfrac{1}{f_{CLK}}}{N_{RES} \cdot \dfrac{1}{f_{CLK}}} = \frac{\pi}{\ln \dfrac{a_{HIGH}}{a_{LOW}}} \cdot \frac{N_{DMP}}{N_{RES}} \quad \cdots (3)$$

That is, by using the common clock signal $f_{CLK}$ for the counters 234 and 252, the Q factor can be measured using only the count values of the counters. This makes it possible to eliminate the influence of frequency accuracy of the clock signal, and thus to further improve accuracy in measuring the Q factor.

The Q factor and the resonant frequency measured as described above are input to the anomaly determining circuit 150, which determines an anomaly associated with adhesion of water droplets and mud on the basis of such relations as those shown in Fig. 4 and Fig. 5.

As described above, a three-terminal ultrasonic transducer is used, and a detecting circuit is connected to the receiving electrode of the ultrasonic transducer to measure the resonant frequency and the Q factor of the ultrasonic transducer. This reduces the influence of the impedance of the transmitting circuit, and improves accuracy in measuring the resonant frequency and the Q factor. It is thus possible to improve accuracy in detecting an anomaly associated with adhesion of water droplets and mud to the ultrasonic transducer.

First Modification

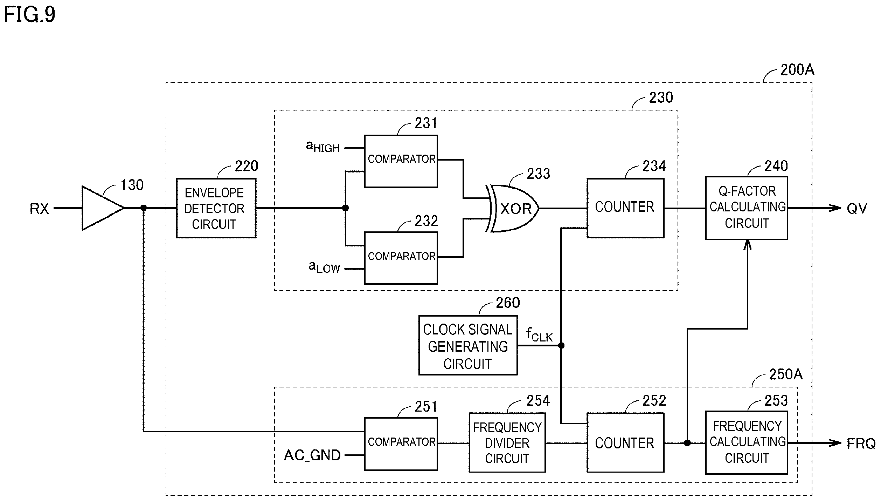

Fig. 9 is a diagram illustrating a modification of the detecting circuit of the ultrasonic apparatus 100 according to the first embodiment. A detecting circuit 200A according to a first modification is obtained by adding a frequency divider circuit 254 to the resonant frequency measuring circuit 250 of the detecting circuit 200 illustrated in Fig. 8. Referring to Fig. 9, the resonant frequency measuring circuit 250A includes the comparator 251, the frequency divider circuit 254, the counter 252, and the frequency calculating circuit 253. Of the elements illustrated in Fig. 9, the same ones as those illustrated in Fig. 8 will not be described again here.

Referring to Fig. 9, the frequency divider circuit 254 divides the frequency of the receive signal output from the comparator 251. On the basis of the signal frequency-divided by the frequency divider circuit 254, the counter 252 calculates the period $T_{RES}$ of the reverberation signal. Since the frequency divider circuit 254 enables the period $T_{RES}$ (i.e., resonant frequency $f_{RES}$) to be calculated on the basis of multiple periods of time, the resolution (precision) of the measured resonant frequency can be further improved.

Second Modification

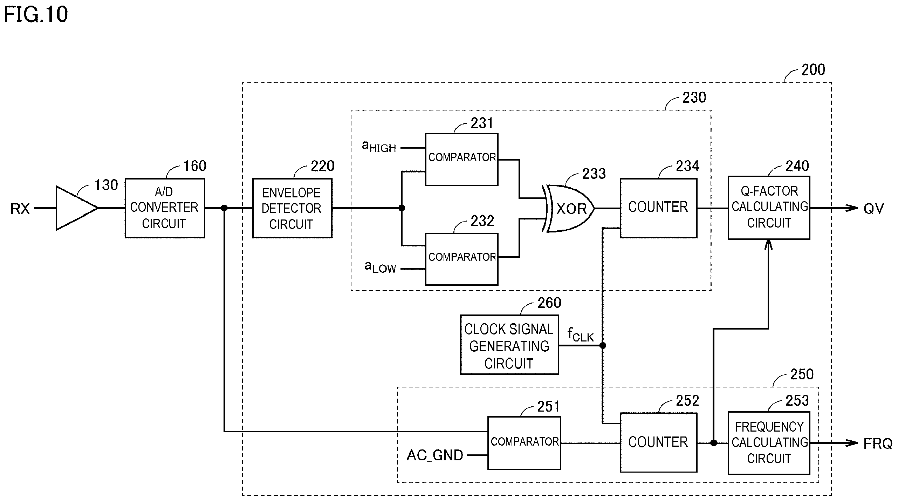

Fig. 10 is a diagram illustrating a modification obtained by adding an A/D converter circuit 160 upstream of the detecting circuit 200 in the ultrasonic apparatus 100 of the first embodiment. In the modification illustrated in Fig. 10, signal processing in the detecting circuit 200 is executed by a digital circuit.

The configuration of the second modification may be combined with the configuration of the first modification.

Second Embodiment

When a three-terminal ultrasonic transducer is used as in the first embodiment, the influence of the impedance of the transmitting circuit 110 can be reduced to a certain extent. When the impedance of the transmitting circuit 110 varies, however, the measured electrostatic capacitance value may also vary.

A second embodiment described herein provides a configuration in which, when the resonant frequency and the Q factor are measured in the detecting circuit 200 on the receiving side, the transmitting electrode 121 is grounded so as to fix the impedance of the transmitting circuit 110 and stabilize the measurement of electrostatic capacitance.

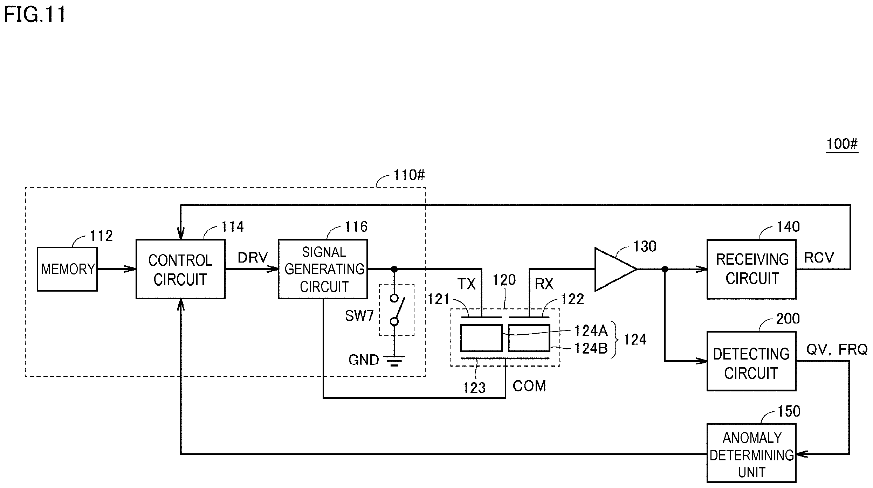

Fig. 11 is an overall block diagram of an ultrasonic apparatus 100# according to the second embodiment. In Fig. 11, a transmitting circuit 110# replaces the transmitting circuit 110 of the first embodiment illustrated in Fig. 1. The transmitting circuit 110# includes a switching unit (switching element) SW7, as well as the components of the transmitting circuit 110 illustrated in Fig. 1. The switching element SW7 is capable of enabling and disabling conduction between the transmitting electrode 121 and the ground potential GND. When the detecting circuit 200 measures the resonant frequency and the Q factor, the switching element SW7 is brought into conduction to connect the transmitting electrode 121 to the ground potential GND.

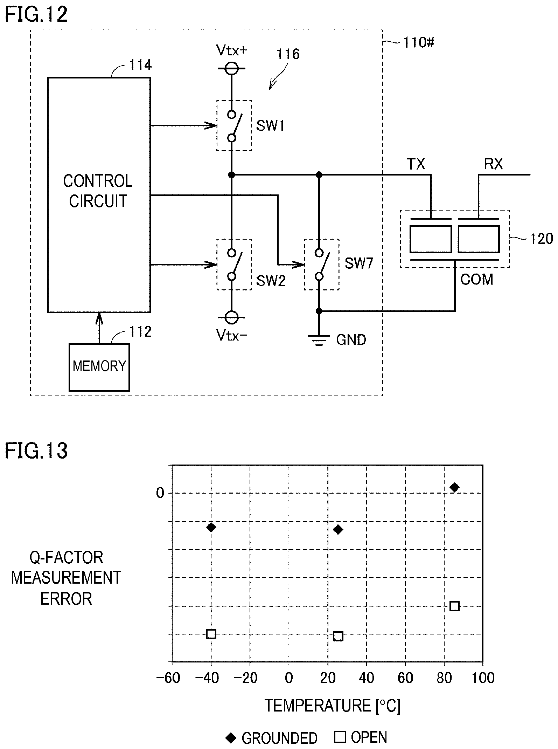

Fig. 12 is a diagram corresponding to Fig. 2 of the first embodiment. Fig. 12 illustrates the transmitting circuit 110# in which the signal generating circuit 116 is formed as a half-bridge circuit. In the transmitting circuit 110#, the switching element SW7 is electrically connected at one end thereof to a connection node between the switching element SW1 and the switching element SW2 (i.e., to the transmitting electrode 121), and connected at the other end thereof to the ground potential GND. The switching element SW7 is driven by the control circuit 114 and brought into conduction when the resonant frequency and the Q factor are measured in the detecting circuit 200.

The impedance between TX and COM is thus short-circuited and completely removed. This makes it possible to eliminate the influence of the impedance of the transmitting circuit.

While not shown, if the signal generating circuit 116 is formed as a full-bridge circuit, the influence of the impedance of the transmitting-side circuit can be eliminated in the same manner as in Fig. 12 without requiring the switching element SW7. More specifically, since TX and COM can be short-circuited by bringing the switching element SW4 into conduction in Fig. 3, there is no need to add the switching element SW7.

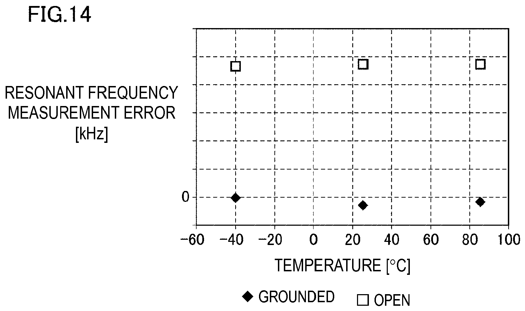

Fig. 13 and Fig. 14 are graphs showing a result of simulation which simulated errors from the designed values of Q-factor and resonant frequency under conditions in which, during measurement of the Q factor and the resonant frequency, the transmitting electrode was grounded (second embodiment) and not grounded (first embodiment). For both the Q factor and the resonant frequency, the simulation was carried out at an element temperature of -40°C, +25°C, and +85°C.

Fig. 13 and Fig. 14 show that at any temperature, for both the Q factor and the resonant frequency, the measurement error that occurred when the transmitting electrode was grounded was smaller than the measurement error that occurred when the transmitting electrode was not grounded (i.e., the measurement error in the former case

EP 3 576 429 B1

was closer to zero than that in the latter case was).

As described above, a three-terminal ultrasonic transducer is used, a detecting circuit is connected to the receiving electrode of the ultrasonic transducer to measure the resonant frequency and the Q factor of the ultrasonic transducer, and the transmitting electrode is grounded when the resonant frequency and the Q factor are measured. Thus, the influence of the impedance of the transmitting circuit on the resonant frequency and the Q factor can be eliminated. This further improves accuracy in measuring the resonant frequency and the Q factor, and improves accuracy in detecting an anomaly associated with adhesion of water droplets and mud to the ultrasonic transducer.

The second embodiment is also applicable to the modifications of the first embodiment.

The embodiments disclosed herein should be considered illustrative, not restrictive, in all aspects. The scope of the present invention is defined by the appended claims, not by the explanation described above.

Reference Signs List

100,100# ultrasonic apparatus
110,110A, 110# transmitting circuit
112 memory
114 control circuit
116,116A signal generating circuit
120 ultrasonic transducer
121 transmitting electrode
122 receiving electrode
123 common electrode
124 piezoelectric body
124A transmitting region
124B receiving region
130 amplifier
140 receiving circuit
150 anomaly determining circuit
160 A/D converter circuit
200,200A detecting circuit
210 Q-factor measuring circuit
220 envelope detector circuit
230 damping time measuring circuit
231,232,251 comparator
233 XOR circuit
234,252 counter
240 Q-factor calculating circuit
250 resonant frequency measuring circuit
253 frequency calculating circuit
254 frequency divider circuit
260 clock signal generating circuit
COM,RX,TX terminal
GND ground potential
SW1 to SW7 switching element
$V_{tx}$, $V_{tx+}$, $V_{tx-}$ power supply

**Claims**

1. An ultrasonic apparatus (100) comprising:

   a three-terminal ultrasonic transducer (120) including a common electrode (123), a transmitting electrode (121), a receiving electrode (122) independent of the transmitting electrode, and
   a piezoelectric body (124) including a transmitting region (124A) for transmitting ultrasonic waves and a receiving region (124B) for receiving reflected ultrasonic waves;
   a transmitting circuit (110) configured to output a driving signal to the transmitting electrode to cause the ultrasonic

**EP 3 576 429 B1**

transducer to transmit ultrasonic waves;
a receiving circuit (140) configured to receive a receive signal from the receiving electrode;
a frequency measuring circuit (200, 250) configured to measure a resonant frequency of the ultrasonic transducer from a reverberation signal in the receive signal;
a Q-factor measuring circuit (200, 240) configured to measure a Q factor of the ultrasonic transducer from the reverberation signal, and
an anomaly determining unit (150) configured to determine an anomaly of the ultrasonic transducer on the basis of the Q factor measured by the Q-factor measuring circuit (200, 240) and the resonant frequency measured by the frequency measuring circuit (200, 250).

2. The ultrasonic apparatus according to claim 1, wherein the anomaly determining circuit (150) is configured to make an anomaly determination based on changes in the Q factor and the resonant frequency due to adhesion of water droplets or mud to a surface of the ultrasonic transducer (120).

3. The ultrasonic apparatus according to claim 1, wherein

the transmitting electrode (121) is disposed opposite the common electrode (123), with the transmitting region (124A) of the piezoelectric body (124) interposed therebetween, and is electrically connected to the transmitting region (124A),
the receiving electrode (122) is disposed opposite the common electrode (12) with the receiving region (124B) of the piezoelectric body interposed therebetween, and is electrically connected to the receiving region (124B), and
the common electrode (123) is electrically connected to both the transmitting region (124A) and the receiving region (124B).

4. The ultrasonic apparatus according to any of claims 1 to 3, further comprising a switching unit (SW7) configured to ground the transmitting electrode when the Q-factor measuring circuit measures the Q factor and the frequency measuring circuit measures the resonant frequency.

5. The ultrasonic apparatus according to any one of claims 1 to 4, wherein the Q-factor measuring circuit includes

an envelope detecting circuit (220) configured to detect an envelope of an amplitude of the reverberation signal;
a damping time measuring circuit (230) configured to measure a damping time taken by the amplitude to decay from a first amplitude to a second amplitude on the envelope; and
a Q-factor calculating circuit (240) configured to calculate the Q factor of the ultrasonic transducer on the basis of the first and second amplitudes, the damping time, and the resonant frequency of the ultrasonic transducer.

6. The ultrasonic apparatus according to claim 5, further comprising a clock signal generating circuit (260) configured to generate a clock signal used in common by the Q-factor measuring circuit (240) and the frequency measuring circuit (250).


**Patentansprüche**

1. Ultraschallvorrichtung (100), umfassend:

einen Ultraschallwandler mit drei Anschlüssen (120), der eine gemeinsame Elektrode (123), eine Sendeelektrode (121), eine von der Sendeelektrode unabhängige Empfangselektrode (122) aufweist, und
einen piezoelektrischen Körper (124), der eine Senderegion (124A) zum Senden von Ultraschallwellen und eine Empfangsregion (124B) zum Empfangen reflektierter Ultraschallwellen aufweist;
eine Sendeschaltung (110), die zum Ausgeben eines Treibersignals an die Sendeelektrode, um den Ultraschallwandler zum Senden von Ultraschallwellen zu veranlassen, konfiguriert ist;
eine Empfangsschaltung (140), die zum Empfangen eines Empfangssignals von der Empfangselektrode konfiguriert ist;
eine Frequenzmessschaltung (200, 250), die zum Messen einer Resonanzfrequenz des Ultraschallwandlers aus einem Nachhallsignal im Empfangssignal zu messen;
eine Q-Faktor-Messschaltung (200, 240), die zum Messen eines Q-Faktors des Ultraschallwandlers aus dem Nachhallsignal konfiguriert ist, und

eine Anomaliebestimmungseinheit (150), die zum Bestimmen einer Anomalie des Ultraschallwandlers auf der Grundlage des von der Q-Faktor-Messschaltung (200, 240) gemessenen Q-Faktors und der von der Frequenzmessschaltung (200, 250) gemessenen Resonanzfrequenz konfiguriert ist.

2. Ultraschallvorrichtung nach Anspruch 1, wobei die Anomaliebestimmungsschaltung (150) zum Treffen einer Anomaliebestimmung auf der Grundlage von Änderungen des Q-Faktors und der Resonanzfrequenz aufgrund der Adhäsion von Wassertröpfchen oder Schlamm an einer Oberfläche des Ultraschallwandlers (120) konfiguriert ist.

3. Ultraschallvorrichtung nach Anspruch 1, wobei

die Sendeelektrode (121) der gemeinsamen Elektrode (123) entgegengesetzt positioniert ist, wobei die Senderegion (124A) des piezoelektrischen Körpers (124) dazwischen angeordnet ist, und elektrisch mit der Senderegion (124A) verbunden ist,
die Empfangselektrode (122) der gemeinsamen Elektrode (12) entgegengesetzt positioniert ist, wobei die Empfangsregion (124B) des piezoelektrischen Körpers dazwischen angeordnet ist, und elektrisch mit der Empfangsregion (124B) verbunden ist, und
die gemeinsame Elektrode (123) sowohl mit der Senderegion als auch der Empfangsregion (124B) elektrisch verbunden ist.

4. Ultraschallvorrichtung nach einem der Ansprüche 1 bis 3, die ferner eine Schalteinheit (SW7) umfasst, die zum Erden der Sendeelektrode, wenn die Q-Faktor-Messschaltung den Q-Faktor misst und die Frequenzmessschaltung die Resonanzfrequenz misst, konfiguriert ist.

5. Ultraschallvorrichtung nach einem der Ansprüche 1 bis 4, wobei die Q-Faktor-Messschaltung aufweist

eine Hüllkurven-Erfassungsschaltung (220), die zum Erfassen einer Hüllkurve einer Amplitude des Nachhallsignals konfiguriert ist;
eine Dämpfungszeit-Messschaltung (230), die zum Messen einer Dämpfungszeit konfiguriert ist, die von der Amplitude benötigt wird, um von einer ersten Amplitude auf eine zweite Amplitude auf der Hüllkurve abzufallen; und
eine Q-Faktor-Berechnungsschaltung (240), die zum Berechnen des Q-Faktors des Ultraschallwandlers auf der Grundlage der ersten und der zweiten Amplitude, der Dämpfungszeit und der Resonanzfrequenz des Ultraschallwandlers konfiguriert ist.

6. Ultraschallvorrichtung nach Anspruch 5, ferner mit einer Taktsignal-Erzeugungsschaltung (260), die zum Erzeugen eines Taktsignals, das gemeinsam von der Q-Faktor-Messschaltung (240) und der Frequenzmessschaltung (250) verwendet wird, konfiguriert ist.

**Revendications**

1. Appareil à ultrasons (100) comprenant :

un transducteur à ultrasons à trois terminaux (120) comprenant une électrode commune (123), une électrode de transmission (121), une électrode de réception (122) indépendante de l'électrode de transmission, et
un corps piézoélectrique (124) comprenant une région de transmission (124A) pour transmettre des ondes ultrasonores et une région de réception (124B) pour recevoir des ondes ultrasonores réfléchies ;
un circuit de transmission (110) configuré pour sortir un signal d'entraînement à l'électrode de transmission pour faire que le transducteur à ultrasons transmette des ondes ultrasonores ;
un circuit de réception (140) configuré pour recevoir un signal de réception de l'électrode de réception ;
un circuit de mesure de fréquence (200, 250) configuré pour mesurer une fréquence de résonance du transducteur à ultrasons d'un signal de réverbération dans le signal de réception ;
un circuit de mesure de facteur Q (200, 240) configuré pour mesurer un facteur Q du transducteur à ultrasons provenant du signal de réverbération, et
une unité de détermination d'anomalie (150) configurée pour déterminer une anomalie du transducteur à ultrasons sur la base du facteur Q mesuré par le circuit de mesure de facteur Q (200, 240) et de la fréquence de résonance mesurée par le circuit de mesure de fréquence (200, 250).

**2.** Appareil à ultrasons selon la revendication 1, dans lequel le circuit de détermination d'anomalie (150) est configuré pour faire une détermination d'anomalie sur la base de changements dans le facteur Q et dans la fréquence de résonance dus à l'adhésion de gouttelettes d'eau ou de boue sur une surface du transducteur à ultrasons (120).

**3.** Appareil à ultrasons selon la revendication 1, dans lequel

l'électrode de transmission (121) est disposée à l'opposé de l'électrode commune (123), avec la région de transmission (124A) du corps piézoélectrique (124) interposée entre elles, et elle est connectée électriquement à la région de transmission (124A),
l'électrode de réception (122) est disposée à l'opposé de l'électrode commune (12) avec la région de réception (124B) du corps piézoélectrique interposée entre elles, et elle est connectée électriquement à la région de réception (124B), et
l'électrode commune (123) est connectée électriquement à la région de transmission (124A) et à la région de réception (124B) toutes les deux.

**4.** Appareil à ultrasons selon l'une quelconque des revendications 1 à 3, comprenant en outre une unité de commutation (SW7) configurée pour mettre à la terre l'électrode de transmission lorsque le circuit de mesure de facteur Q mesure le facteur Q et que le circuit de mesure de fréquence mesure la fréquence de résonance.

**5.** Appareil à ultrasons selon l'une quelconque des revendications 1 à 4, dans lequel le circuit de mesure de facteur Q comprend

un circuit de détection d'enveloppe (220) configuré pour détecter une enveloppe d'une amplitude du signal de réverbération ;
un circuit de mesure de temps d'amortissement (230) configuré pour mesurer un temps d'amortissement pris par l'amplitude pour décroître d'une première amplitude à une deuxième amplitude sur l'enveloppe ; et
un circuit de calcul de facteur Q (240) configuré pour calculer le facteur Q du transducteur à ultrasons sur la base de la première et de la deuxième amplitude, du temps d'amortissement et de la fréquence de résonance du transducteur à ultrasons.

**6.** Appareil à ultrasons selon la revendication 5, comprenant en outre un circuit de génération de signal d'horloge (260) configuré pour générer un signal d'horloge utilisé en commun par le circuit de mesure de facteur Q (240) et le circuit de mesure de fréquence (250).

FIG.1

FIG.2

FIG.3

FIG.4

FIG.5

FIG.6

FIG.7

EP 3 576 429 B1

FIG.8

FIG.9

FIG.10

RX

130

A/D CONVERTER CIRCUIT — 160

ENVELOPE DETECTOR CIRCUIT — 220

$a_{HIGH}$ — COMPARATOR — 231

$a_{LOW}$ — COMPARATOR — 232

XOR — 233

COUNTER — 234

230

Q-FACTOR CALCULATING CIRCUIT — 240 → QV

CLOCK SIGNAL GENERATING CIRCUIT — 260 — $f_{CLK}$

AC_GND — COMPARATOR — 251

COUNTER — 252

FREQUENCY CALCULATING CIRCUIT — 253 → FRQ

250

200

21

EP 3 576 429 B1

FIG.11

EP 3 576 429 B1

FIG.12

FIG.13

Q-FACTOR
MEASUREMENT
ERROR

TEMPERATURE [°C]

◆ GROUNDED    □ OPEN

FIG.14

RESONANT FREQUENCY
MEASUREMENT ERROR
[kHz]

TEMPERATURE [°C]

◆ GROUNDED    □ OPEN

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2998232 B
- JP 2015010888 A
- EP 0706835 A
- JP 2015010888 B

- EP 1410950 A
- JP 2014115255 B
- WO 2016167003 A